# EUROPÄISCHE PATENTSCHRIFT

(11) **EP 2 933 025 B1**
(45) Veröffentlichungstag und Bekanntmachung des Hinweises auf die Patenterteilung: **22.03.2017**
(21) Anmeldenummer: 15001001.5
(22) Anmeldetag: 08.04.2015
(51) Int. Cl.: B05B 7/24, A01M 7/00, B05B 9/08

(54) **TRAGBARES SPRÜHGERÄT MIT EINEM TRAGGESTELL**
PORTABLE SPRAYING DEVICE WITH A CARRYING FRAME
PULVÉRISATEUR PORTABLE DOTÉ D'UN CADRE PORTEUR

(30) Priorität: 09.04.2014 DE 102014005188
(43) Veröffentlichungstag der Anmeldung: 21.10.2015
(73) Patentinhaber: Andreas Stihl AG & Co. KG, 71336 Waiblingen (DE)
(72) Erfinder: Wiedmann, Hans-Georg, 71522 Backnang (DE)
(74) Vertreter: Wasmuth, Rolf

(56) Entgegenhaltungen:
- EP-A1- 2 108 257
- WO-A1-2013/065435
- DE-A1- 1 607 396
- US-A1- 2006 266 308

## Beschreibung

Die Erfindung betrifft ein tragbares Sprühgerät aus einem Traggestell, einer Gebläseeinheit und einem Vorratsbehälter für ein auszubringendes Mittel nach dem Oberbegriff des Anspruchs 1.

Dokument EP 2108257 A1 beschriebt ein Sprühgerät gemäß dem Oberbegriff des Anspruchs 1.

Ein derartiges Sprühgerät ist bekannt. Das Traggestell besteht aus einer Rückenplatte und zwei senkrecht zur Rückenplatte liegenden Kragträgern, die eine erste Einheit mit einem Vorratsbehälter und eine zweite Einheit mit einer Gebläseeinheit tragen. In dem Vorratsbehälter wird das über die Gebläseeinheit auszubringende Mittel gespeichert und über eine geeignete Förderung dem Blasrohr der Gebläseeinheit zugeführt. Die auf den Kragträgern gehaltenen Einheiten liegen dabei in Hochrichtung des Traggestells mit Abstand zueinander, wobei zwischen der ersten, oberen Einheit mit dem Vorratsbehälter und der zweiten, unteren Einheit mit der Gebläseeinheit ein Bewegungsspalt ausgebildet ist.

Wird das Sprühgerät vom Rücken abgenommen und hart auf den Boden aufgesetzt, kann es - insbesondere wenn der Vorratsbehälter gut gefüllt ist - zu erheblichen Auslenkungen der oberen Einheit relativ zur unteren Einheit kommen. Dabei kann der obere Kragträger erheblich ausgelenkt werden, was zu Beschädigungen führen kann.

Der Erfindung liegt die Aufgabe zugrunde, ein tragbares Sprühgerät mit einem Traggestell und daran befestigten Einheiten mit einem Vorratsbehälter und einer Gebläseeinheit derart auszubilden, dass die bei Stoßbelastung auftretende elastische Auslenkung der oberen Einheit begrenzt ist.

Die Aufgabe wird erfindungsgemäß nach den kennzeichnenden Merkmalen des Anspruchs 1 gelöst.

An einer der Einheiten ist ein dämpfendes Anschlagelement angeordnet, welches den Bewegungsspalt zwischen der oberen Einheit und der unteren Einheit begrenzt; vorteilhaft ragt das dämpfende Anschlagelement in den Bewegungsspalt ein. Durch das dämpfende Anschlagelement ist die elastische Auslenkung der ersten, oberen Einheit begrenzt, z. B. durch Anlage des Anschlagelementes an der unteren Einheit. Diese Begrenzung der elastischen Auslenkung der oberen Einheit erfolgt über den Weg einer auftretenden elastischen Auslenkung dämpfend, das heißt, es ist kein harter Anschlag vorgesehen.

Vorteilhaft ist das Anschlagelement an der oberen Einheit angeordnet, z. B. als in Richtung auf die zweite, untere Einheit ragende Wegbegrenzung ausgebildet.

Es kann auch vorteilhaft sein, das Anschlagelement aus zwei relativ zueinander beweglichen Anschlagteilen zu bilden, wobei ein erstes Anschlagteil an der oberen Einheit und ein zweites Anschlagteil an der unteren Einheit festgelegt ist. Greifen die Anschlagteile teleskopartig ineinander, ist der Bewegungsspalt gegen Fremdkörper abgedichtet.

Das Anschlagelement selbst ist bevorzugt als Dämpfungselement ausgebildet; als Material für das Dämpfungselement ist insbesondere Gummi geeignet.

Das Anschlagelement besteht aus einem elastischen Dämpfungsabschnitt und einem Halter, wobei der Dämpfungsabschnitt und der Halter in Reihe hintereinander liegen. Der Dämpfungsabschnitt besteht bevorzugt aus Gummi, während der Halter als starrer Halter gestaltet ist.

Die zweite, untere Einheit ist mit Antivibrationselementen am Traggestell gehalten. Die zweite, untere Einheit ist so unabhängig von der ersten, oberen Einheit vom Traggestell abgekoppelt, wobei die Antivibrationselemente als dämpfende Elemente gestaltet sein können.

Durch die Ausbildung des Anschlagelementes zwischen der oberen Einheit und der unteren Einheit als Dämpfungselement und die Anordnung der Antivibrationselemente zwischen der zweiten Einheit und dem Traggestell ergibt sich über den Weg der elastischen Auslenkung des oberen Kragträger ein Kraft-Weg-Diagramm mit unterschiedlichen Dämpfungsstufen. Durch Anlage des Anschlagelementes im Bewegungsspalt an der gegenüberliegenden Einheit ist eine erste Dämpfungsstufe gebildet, die von der Weichheit des Dämpfungselementes bestimmt ist. Ist das Anschlagelement im Bewegungsspalt komprimiert, also der Dämpfungshub erschöpft, wirken die Antivibrationselemente der zweiten, unteren Einheit als nächste Dämpfungsstufe. Diese nächste Dämpfungsstufe ist in ihrer Charakteristik durch die Eigenschaften der Antivibrationselemente der unteren, zweiten Einheit bestimmt.

In besonderer Ausgestaltung ist der Vorratsbehälter der ersten Einheit mit einem ersten, oberen Kragträger am Traggestell gehalten. Die zweite Einheit mit der Gebläseeinheit und zweckmäßig dem Antriebsmotor ist mit einem zweiten, unteren Kragträger am Traggestell gehalten. Die Kragträger stützen die Einheiten ab und leiten die Stützkräfte in das Traggestell ein.

Die zweite Einheit, vorteilhaft die Gebläseeinheit mit dem Antriebsmotor, liegt zwischen dem ersten, oberen Kragträger und dem zweiten, unteren Kragträger. Der obere, erste Kragträger liegt somit zwischen der zweiten Einheit aus Gebläseeinheit und Antriebsmotor und dem Vorratsbehälter des Sprühgerätes.

Durch die erfindungsgemäße Gestaltung des Sprühgerätes wird die Auslenkung des ersten, oberen Kragträgers durch den zweiten, unteren Kragträger begrenzt. Damit ist sichergestellt, dass bei einem aus Kunststoff bestehenden Traggestell eine mechanische Beschädigung des oberen Kragträgers durch eine zu große Auslenkung vermieden ist. Zweckmäßig ist das Anschlagelement am ersten, oberen Kragträger festgelegt.

Weitere Merkmale der Erfindung ergeben sich aus den weiteren Ansprüchen, der Beschreibung und der Zeichnung, in der ein nachstehend im Einzelnen beschriebenes Ausführungsbeispiel der Erfindung dargestellt ist. Es zeigen:
- Fig. 1: eine Ansicht auf ein Sprühgerät von hinten,
- Fig. 2: eine Seitenansicht des Sprühgerätes nach Fig. 1 mit schematischer Darstellung eines zwischen der oberen Einheit und der unteren Einheit angeordneten Anschlagelementes,

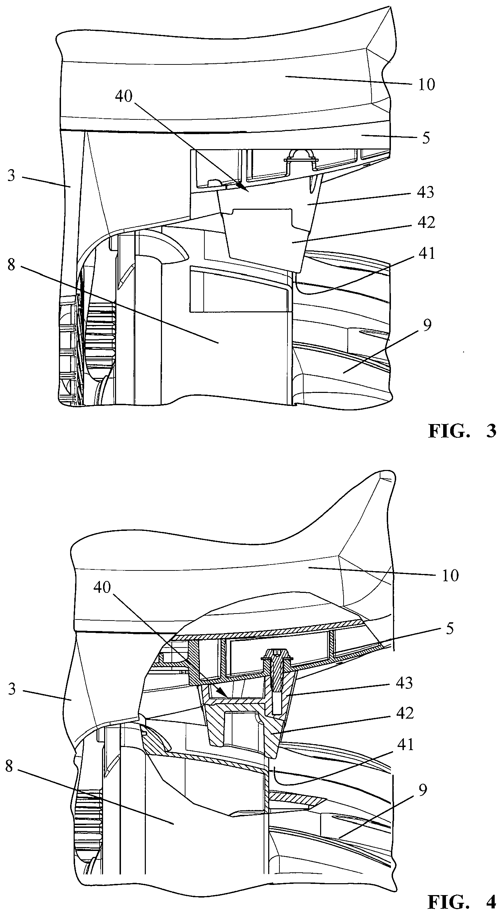

- Fig. 3: in vergrößerter Darstellung das Anschlagelement im Bewegungsspalt,
- Fig. 4: einen Schnitt durch das Anschlagelement nach Fig. 3,
- Fig. 5: eine Seitenansicht auf das Sprühgerät nach Fig. 2 mit teilgeschnittenen Anschlagelementen und Dämpfungselementen,
- Fig. 6: eine vergrößerte Darstellung der Abstützung der Gebläseeinheit durch Antivibrationselemente,
- Fig. 7: ein Kraft-Weg-Diagramm der Dämpfung,
- Fig. 8: ein Weg-Zeit-Diagramm der Auslenkung bei einem harten Absetzen des Sprühgerätes auf dem Boden.

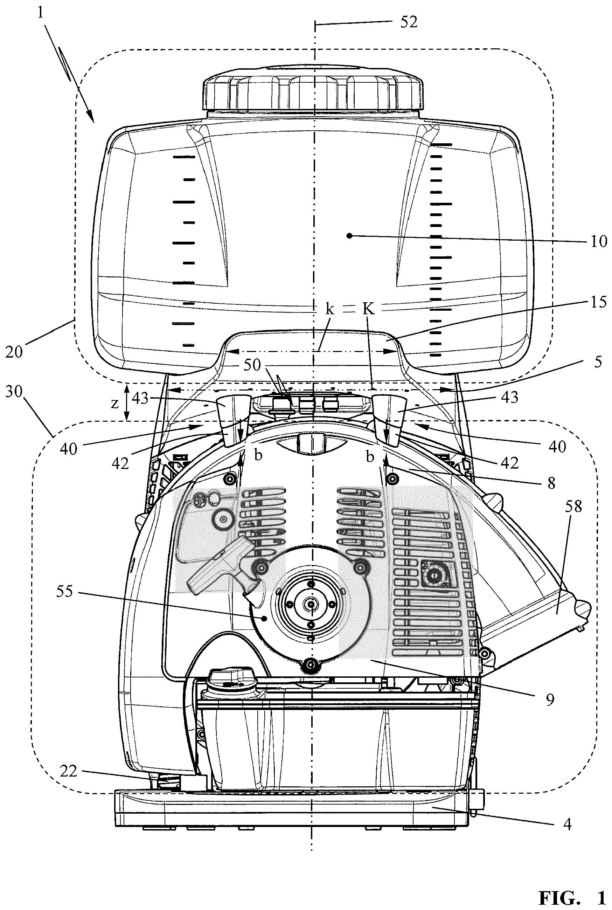

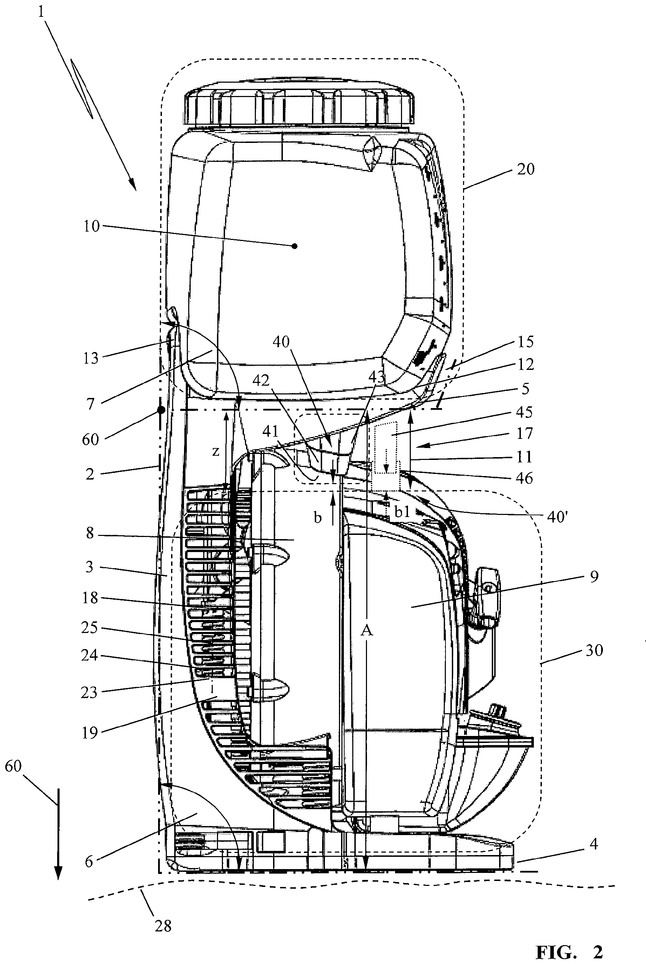

Das in den Figuren 1 und 2 dargestellte Sprühgerät ist ein rückengetragenes Sprühgerät 1 und umfasst ein Traggestell 2, welches auf dem Rücken eines Benutzers zu tragen ist.

Wie Fig. 2 zeigt, besteht das Traggestell 2 im Wesentlichen aus einer auf dem Rücken eines Benutzers festgelegten Rückenplatte 3, die einen ersten, unteren Kragträger 4 und einen zweiten, oberen Kragträger 5 aufweist. Die Kragträger 4 und 5 schließen im Wesentlichen mit einem rechten Winkel 6 und 7 an die Rückenplatte 3 an; das Traggestell 2 aus der Rückenplatte 3 und den Kragträgern 4 und 5 ist insbesondere aus Kunststoff gefertigt. Zweckmäßig sind die Rückenplatte 3 und die Kragträger 4 und 5 als einteiliges Bauteil gestaltet.

Auf dem unteren Kragträger 4 ist eine Gebläseeinheit 8 abgestützt, die von einem nicht näher dargestellten Verbrennungsmotor 9, insbesondere einem Zweitaktmotor oder einem Viertaktmotor angetrieben ist. Als Antriebsmotor kann auch ein Elektromotor vorgesehen sein.

Auf dem oberen Kragträger 5 ist ein Vorratsbehälter 10 gehalten, in dem ein von der Gebläseeinheit 8 auszubringendes Mittel aufgenommen ist. Der Vorratsbehälter 10 kann einteilig mit dem Kragträger 5 ausgebildet sein; insbesondere bilden das Traggestell 2 und der Vorratsbehälter 10 eine Baueinheit und sind aus einem Bauteil, z. B. aus Kunststoff gefertigt.

Wie aus der Ansicht von hinten gemäß Fig. 1 zu ersehen, ist eine obere, erste Einheit 20 symmetrisch zu einer Längsmittelachse 52 gestaltet, wobei sich der Kragträger 5 zu seinem freien Ende 15 verjüngt. Im Anschlussbereich des Kragträgers 5 an die Rückenplatte 3 hat der Kragträger 5 eine Breite K, die zweckmäßig der Breite der Rückenplatte 3 entspricht. Im Bereich seines freien Endes 15 hat der Kragträger 5 eine kleinere Breite k. Bezogen auf die Längsmittelachse 52 ist der Kragträger 5 symmetrisch ausgebildet.

Auf dem unteren Kragträger 4 ist der Antriebsmotor 9 mit einer Gebläseeinheit 8 gehalten, wobei die Gebläseeinheit 8 ein Gebläseausgang 58 zum Anschluss eines Gebläserohres aufweist. Etwa mittig zur Gebläseeinheit 8 ist ein Seilzugstarter 55 zum Starten des Antriebsmotors 9 vorgesehen, der im gezeigten Ausführungsbeispiel ein Verbrennungsmotor ist.

Im gezeigten Ausführungsbeispiel bildet der Vorratsbehälter 10 die erste Einheit 20; eine zweite Einheit 30 umfasst die Gebläseeinheit 8, und - im Ausführungsbeispiel - auch den die Gebläseeinheit 8 antreibenden Antriebsmotor 9.

Die erste Einheit 20 ist im oberen Bereich des Traggestells 2 gehalten; im Ausführungsbeispiel ist der Vorratsbehälter 10 auf dem ersten, oberen Kragträger 5 befestigt. Die zweite Einheit - im Ausführungsbeispiel die Gebläseeinheit 8 und der Antriebsmotor 9 - sind im unteren Bereich des Traggestells 2 festgelegt; im Ausführungsbeispiel ist die zweite Einheit am unteren, zweiten Kragträger 4 gehalten. Die Kragträger 4 und 5 haben einen derartigen Abstand A voneinander, dass zwischen der ersten Einheit 20 und der zweiten Einheit 30 Abstand z verbleibt, der einen Freiraum 11 ausbildet. Die Kragträger 4 und 5 liegen zueinander etwa parallel; der obere Kragträger 5 umgreift mit seinem freien Ende 15 den unteren Randbereich 12 des Vorratsbehälters 10, so dass dieser zwischen dem abgewinkelten freien Ende 15 des Kragträgers 5 und dem oberen Rand 13 der Rückenplatte 3 gehalten ist. Der Vorratsbehälter 10 ist durch Befestigungsmittel mit dem Kragträger 5 unverlierbar verbunden.

Der Freiraum 11 bildet einen Bewegungsspalt 17 zwischen der oberen Einheit 20 mit dem Kragträger 5 und der unteren Einheit 30 mit dem unteren Kragträger 4.

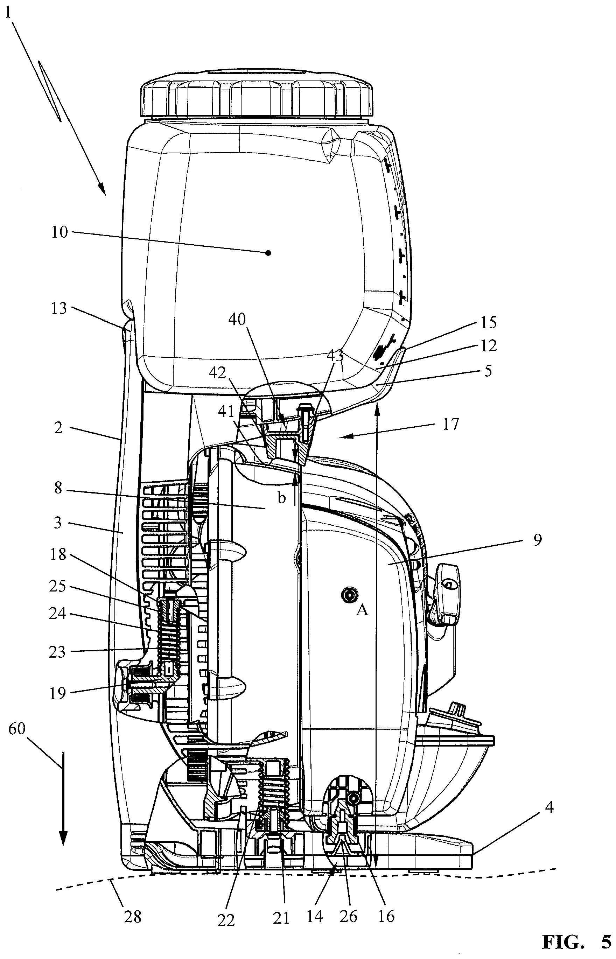

Wie insbesondere Fig. 5 zeigt, ist die Gebläseeinheit 8 mit dem Antriebsmotor 9, also die untere Einheit 30, mit einem Antivibrationselement 22 auf dem unteren Kragträger 4 abgestützt. Über die Breite der Rückenplatte 3 sind bevorzugt zwei Antivibrationselemente 22 vorgesehen, die im gezeigten Ausführungsbeispiel als Schraubenfedern 21 ausgebildet sind. Ein erstes Ende der Schraubenfeder 21 ist an der Einheit 30 befestigt, das andere Ende der Schraubenfeder 21 ist auf dem unteren Kragträger 4 festgelegt. Die Längsachse der Schraubenfeder 21 steht aufrecht auf dem Kragträger 4 und liegt etwa parallel zur Rückenplatte 3. Zwischen der Gebläseeinheit 8 und der Rückenplatte 3 ist ein weiteres Antivibrationselement 24 angeordnet, welches ebenfalls aus einer Schraubenfeder 23 besteht. Die Längsachse 25 der Schraubenfeder erstreckt sich längs der Rückenplatte 3; das eine Ende der Schraubenfeder 23 ist über einen Halter 18 mit der Gebläseeinheit 8 und das andere Ende über einen Halter 19 mit dem Traggestell 2 verbunden.

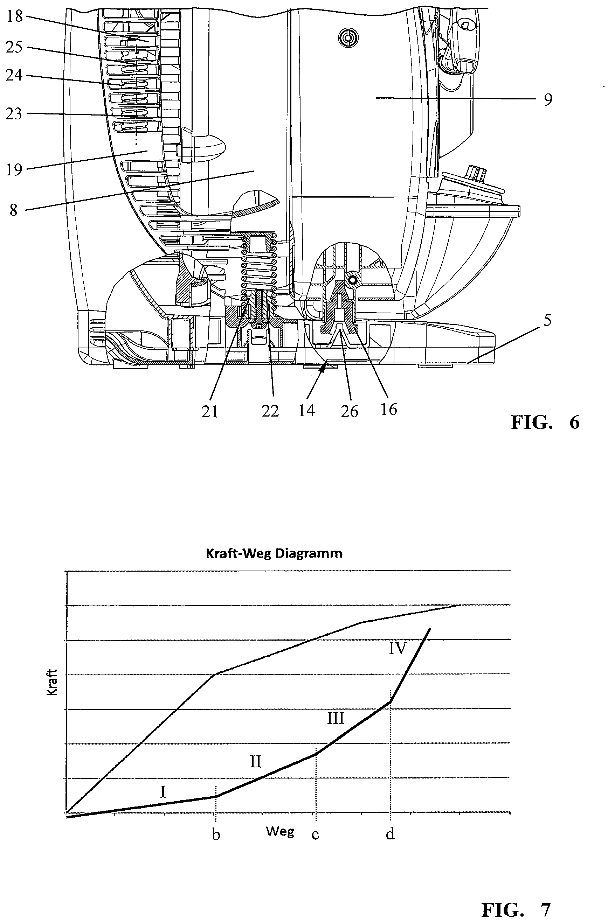

Die Windungen der Schraubenfedern 21 und 23 liegen mit Abstand zueinander, so dass Schwingungen der Antriebseinheit 9 bzw. der Gebläseeinheit 8 von dem Traggestell 2 entkoppelt sind. Ein Endanschlag 14 zwischen dem Kragträger 4 und der Einheit 30, im Ausführungsbeispiel dem Antriebsmotor 9, begrenzt ein Zusammendrücken der Schraubenfedern 21 und 23 in Richtung ihrer Längsachse 25. Hierzu ist ein elastischer Anschlag 16 vorgesehen, der mit einem Gegenanschlag 26 zusammenwirkt. Der elastische Anschlag 16 bestimmt die Dämpfung der zweiten Einheit 30 gegenüber dem Traggestell 2, sofern der maximale Dämpfungsweg d (Fig. 7) der Antivibrationselemente 22 und 24 überwunden ist.

Die zweite Einheit 30 ist zwischen dem ersten, oberen Kragträger 5 und dem zweiten, unteren Kragträger 4 angeordnet. Die erste Einheit 20 ist auf dem Kragträger 5 angeordnet.

Der zwischen dem oberen Kragträger 5 und der zweiten Einheit 30 aus Gebläseeinheit 8 und Antriebsmotor 9 gebildete Bewegungsspalt 17 ermöglicht eine elastische Auslenkung der ersten Einheit 20 relativ zur zweiten Einheit 30 bei einer Stoßbelastung des Traggestells 2 durch Absetzen des Traggestells 2 auf dem Boden 28. Im Ausführungsbeispiel wird der obere Kragträger 5 bei hartem Aufsetzen auf den Boden 28 elastisch in Richtung auf die zweite Einheit 30 ausgelenkt.

Zur Begrenzung der elastischen Auslenkung der oberen Einheit 20 bzw. des oberen Kragträgers 5 ist ein Anschlagelement 40 vorgesehen, welches den Bewegungsspalt 17 begrenzt, im Ausführungsbeispiel in den Bewegungsspalt 17 einragt. Das Anschlagelement 40 ist derart angeordnet, dass sein freies Ende 41 nach Überwinden eines Abstandes b an der zweiten, unteren Einheit 30 zur Anlage kommt. Der Abstand b entspricht dabei einer maximalen Auslenkung der oberen Einheit 20 relativ zur unteren Einheit 30. Im Ausführungsbeispiel ist der Abstand b so ausgelegt, das eine elastische Auslenkung des oberen Kragträgers 5 dämpfend begrenzt wird.

In einem ersten gezeigten Ausführungsbeispiel ist das Anschlagelement 40 an der oberen Einheit 20 angeordnet, bevorzugt am Kragträger 5 der oberen Einheit 20.

Im gezeigten Ausführungsbeispiel besteht das Anschlagelement 40 aus einem elastischen Dämpfungsabschnitt 42, der in einem Halter 43 gehalten ist. Der Halter kann als starrer Halter ausgebildet sein. Das Anschlagelement und der Halter liegen in Reihe hintereinander.

Das als Dämpfungselement ausgebildete Anschlagelement 40 besteht vorzugsweise aus Gummi. Andere elastische Materialien können ebenfalls zweckmäßig sein.

Der Grad der Dämpfung der elastischen Auslenkung des Kragträgers 5 ist abhängig von der Größe der Auslenkung. Die Dämpfung erfolgt in aufeinanderfolgenden Dämpfungsstufen I bis IV. Die Steigung der Kennlinie in den Dämpfungsstufen I bis IV ist unterschiedlich. Bevorzugt wird die Steigung der Kennlinie der Dämpfungsstufen I bis IV von Stufe zu Stufe steiler.

In Fig. 7 ist ein Kraft-Weg-Diagramm für eine elastische Auslenkung des Kragträgers 5 mit verschiedenen Dämpfungsstufen I bis IV wiedergegeben. Zunächst ist im ersten Abschnitt die Dämpfungsstufe I durch die elastische Auslenkung des oberen Kragträgers 5 durch seine elastischen Eigenschaften gegeben. Ist der Abstand b des dämpfenden Anschlagelementes 40 überwunden, muss bei einer weiteren Auslenkung des Kragträgers 5 der Dämpfungsabschnitt 42 elastisch deformiert werden; entsprechend steigt die Kraft über den Weg an. Die Kennlinie der Dämpfungsstufe II wird steiler. Werden durch die Krafteinwirkung des Kragträgers 5 über das Anschlagelement 40 auf die zweite Einheit 30 die Antivibrationselemente zusammengedrückt, ergibt sich nach einem Weg c (Fig. 7) eine weitere Dämpfungsstufe III. Die steilere Kennlinie des Kraft-Weg-Diagramms ist durch die Antivibrationselemente 22 und 24 bestimmt. Sind auch die Antivibrationselemente 22, 24 zusammengedrückt, liegt der elastische Anschlag 16 am Gegenanschlag 26 des unteren Kragträgers 4 an, wodurch - nach dem Weg d - die Anordnung weiter versteift und das Kraft-Weg-Diagramm ab d einen weiteren Knick zeigt, also die Kennlinie noch steiler wird. Die elastische Abstützung des Kragträgers 5 erfolgt somit in mehreren Dämpfungsstufen I bis IV, wobei bei Anlage des Anschlagelementes 40 an der gegenüberliegenden Einheit 30 und dem elastischen Verformen des Anschlagelementes 40 eine weitere Dämpfungsstufe III gegeben ist, deren Charakteristik durch die Eigenschaften der Antivibrationselemente 22, 24 der unteren, zweiten Einheit 30 bestimmt ist. Ist auch der Dämpfungshub der Antivibrationselemente 22 und 24 erschöpft, läuft der elastische Anschlag 16 der unteren Einheit 30 auf den Gegenanschlag 26 des unteren Kragträgers 4 auf, wodurch eine dritte Dämpfungsstufe IV gebildet ist. Die Kennlinie des Kraft-Weg-Diagramms wird von Dämpfungsstufe zu Dämpfungsstufe steiler.

Die Auslenkung des ersten, oberen Kragträgers 5 wird - am Ende der Dämpfungsstufen I bis IV - durch den zweiten, unteren Kragträger 4 begrenzt.

Alternativ kann das im Bewegungsspalt 17 angeordnete Anschlagelement 40' aus zwei relativ zueinander beweglichen Anschlagteilen 45 und 46 bestehen, wobei ein erstes Anschlagteil 45 an der oberen Einheit 20, zum Beispiel an dessen Kragträger 5 festgelegt sein kann und ein zweites Anschlagteil 46 an der unteren Einheit 30 befestigt ist. Dabei kann es vorteilhaft sein, wenn die Anschlagteile 45 und 46 teleskopartig ineinandergreifen. Dabei liegen die Anschlagteile 45, 46 mit einem Abstand b1 zueinander. Nach Überwindung des Abstandes b1, wird die weitere Auslenkung des Kragträgers 5 gedämpft, vorzugsweise in aufeinanderfolgenden Dämpfungsstufen mit unterschiedlichen Steigungen.

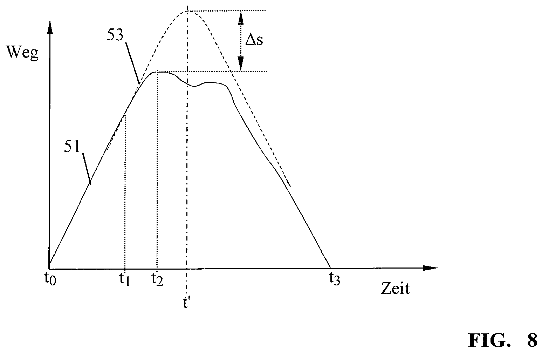

Fig. 8 zeigt den Weg der Auslenkung der oberen Einheit 20 relativ zur unteren Einheit 30 bei einem harten Aufsetzen auf dem Boden 28 in Pfeilrichtung 60 (Figuren 2 und 5). Geht man von einem gut gefüllten Vorratsbehälter aus, z. B. einem Vorratsbehälter mit 15 bis 18 Liter Aufnahmevolumen, wird beim Aufsetzen auf dem Boden 28 der Kragträger 5 im Bereich seines freien Endes 15 ausgelenkt. Dabei werden die Anschlagelemente 40, die symmetrisch rechts und links der Längsmittelachse 52 angeordnet sind, den Abstand b zur unteren Einheit 30 überwinden und auf dem Gehäuse der Gebläseeinheit 8 aufsitzen. In Fig. 8 entspricht dieses dem Zeitraum t₁; im Zeitpunkt to trifft das Sprühgerät auf dem Boden 28 auf. Der zwischen t₀ und t₁ zurückgelegte Weg entspricht der elastischen Auslenkung des Kragträgers 5 an seinem freien Ende 15. Durch das Aufsetzen der Anschlagelemente 40 im Zeitpunkt t₁ wird die weitere elastische Auslenkung des Kragträgers 5 gedämpft; die elastische Auslenkung wird kleiner. Im Zeitpunkt t₂ ist der Dämpfungshub der Anschlagelemente 40 aufgezehrt ebenso wie der Hub der Antivibrationselemente 22 der zweiten Einheit 30 ausgeschöpft ist. Die durch den Aufprall auf dem Boden 28 wirkende Kraft nimmt wieder ab, so dass der Weg der Auslenkung wieder geringer wird und zum Zeitpunkt t₃ der Ursprungszustand (keine Auslenkung) erreicht ist.

Ohne das erfindungsgemäße Anschlagelement 40 würde der Weg der Auslenkung deutlich größer sein, wie dies strichliert in Fig. 8 wiedergegeben ist. Dieser Weg der Auslenkung würde zum Zeitpunkt t' ein Maximum erreichen.

Wie ein Vergleich zwischen der durchgezogenen Kurve 51 und der strichlierten Kurve 53 zeigt, ergibt sich ein verminderter Weg Δs der Auslenkung, wodurch die mechanische Belastung des Traggestells im Bereich der Halterung des Vorratsbehälters 10, im Ausführungsbeispiel die mechanische Belastung des Kragträgers 5, reduziert ist.

## Patentansprüche

1. Tragbares Sprühgerät aus einem Traggestell (2), einer Gebläseeinheit (8) und einem Vorratsbehälter (10) für ein auszubringendes Mittel, wobei an dem Traggestell (2) eine erste Einheit (20) mit dem Vorratsbehälter (10) und eine zweite Einheit (30) mit der Gebläseeinheit (8) gehalten ist, und die erste Einheit (20) und die zweite Einheit (30) in Hochrichtung des Traggestells (2) mit einem Abstand (z) zueinander liegen, wobei der Abstand (z) derart gewählt ist, dass zwischen der ersten, oberen Einheit (20) und der zweiten, unteren Einheit (30) ein Bewegungsspalt (17) ausgebildet ist,
**dadurch gekennzeichnet, dass** an einer Einheit (20, 30) ein dämpfendes Anschlagelement (40) angeordnet ist, welches den Bewegungsspalt (17) begrenzt und eine elastische Auslenkung der ersten, oberen Einheit (20) durch Anlage des Anschlagelementes (40) an der anderen Einheit (30) dämpft.

2. Sprühgerät nach Anspruch 1,
**dadurch gekennzeichnet, dass** das Anschlagelement (40) an der oberen Einheit (20) angeordnet ist.

3. Sprühgerät nach Anspruch 1,
**dadurch gekennzeichnet, dass** das Anschlagelement (40) aus zwei relativ zueinander beweglichen Anschlagteilen (45, 46) besteht und ein erstes Anschlagteil (45) an der oberen Einheit (20) und ein zweites Anschlagteil (46) an der unteren Einheit (30) festgelegt ist.

4. Sprühgerät nach Anspruch 1,
**dadurch gekennzeichnet, dass** das Anschlagelement (40) als Dämpfungselement aus Gummi ausgebildet ist.

5. Sprühgerät nach Anspruch 4,
**dadurch gekennzeichnet, dass** das Anschlagelement (40) aus einem elastischen Dämpfungsabschnitt (42) und einem Halter (43) gebildet ist, die in Reihe hintereinander liegen.

6. Sprühgerät nach Anspruch 5,
**dadurch gekennzeichnet, dass** der Dämpfungsabschnitt (42) aus Gummi besteht.

7. Sprühgerät nach Anspruch 1,
**dadurch gekennzeichnet, dass** die zweite, untere Einheit (30) mit Antivibrationselementen (22, 24) an dem Traggestell (2) gehalten ist.

8. Sprühgerät nach Anspruch 1,
**dadurch gekennzeichnet, dass** nach Anlage des Anschlagelementes (40) an der gegenüberliegenden Einheit (30) eine weitere Dämpfungsstufe gebildet ist, deren Charakteristik durch die Eigenschaften der Antivibrationselemente (22, 24) der unteren, zweiten Einheit (30) bestimmt ist.

9. Sprühgerät nach Anspruch 1,
**dadurch gekennzeichnet, dass** der Vorratsbehälter (10) der ersten Einheit (20) mit einem ersten, oberen Kragträger (5) am Traggestell gehalten ist und die Gebläseeinheit (8) der zweiten Einheit (30) mit einem zweiten, unteren Kragträger (4) am Traggestell gehalten ist.

10. Sprühgerät nach Anspruch 9,
**dadurch gekennzeichnet, dass** die zweite Einheit (30) zwischen dem ersten, oberen Kragträger (5) und dem zweiten, unteren Kragträger (4) angeordnet ist.

11. Sprühgerät nach Anspruch 9 oder 10,
**dadurch gekennzeichnet, dass** die Auslenkung des ersten, oberen Kragträgers (5) durch den zweiten, unteren Kragträger (4) begrenzt ist.

12. Sprühgerät nach einem der Ansprüche 9 bis 11,
**dadurch gekennzeichnet, dass** das Traggestell (2) mit den Kragträgern (4, 5) aus Kunststoff besteht.

## Claims

1. Portable spraying device comprising a carrying frame (2), a blower unit (8) and a reservoir (10) for a medium to be applied, wherein a first unit (20) with the reservoir (10) and a second unit (30) with the blower unit (8) are held on the carrying frame (2) and the first unit (20) and the second unit (30) are positioned at a distance (z) from each other in the vertical direction of the carrying frame (2), the distance (z) being chosen such that a movement gap (17) is formed between the first, upper, unit (20) and the second, lower, unit (30),
**characterised in that** a damping stop element (40), which limits the movement gap (17) and damps an elastic deflection of the first, upper, unit (20) by a contact between the stop element (40) and the other unit (30), is located on one unit (20, 30).

2. Spraying device according to claim 1,
**characterised in that** the stop element (40) is located on the upper unit (20).

3. Spraying device according to claim 1,
**characterised in that** the stop element (40) consists of two stop parts (45, 46) movable relative to each other, and **in that** a first stop part (45) is located on the upper unit (20) and a second stop part (46) is located on the lower unit (30).

4. Spraying device according to claim 1,
**characterised in that** the stop element (40) is designed as a damping element made of rubber.

5. Spraying device according to claim 4,
**characterised in that** the stop element (40) is formed from an elastic damping section (42) and a holder (43), which are arranged in a row one behind the other.

6. Spraying device according to claim 5,
**characterised in that** the damping section (42) is made of rubber.

7. Spraying device according to claim 1,
**characterised in that** the second, lower, unit (30) is held on the carrying frame (2) by means of anti-vibration elements (22, 24).

8. Spraying device according to claim 1,
**characterised in that**, following the contact of the stop element (40) with the opposite unit (30), a further damping stage is formed, its characteristic being determined by the properties of the anti-vibration elements (22, 24) of the lower, second, unit (30).

9. Spraying device according to claim 1,
**characterised in that** the reservoir (10) of the first unit (20) is held on the carrying frame by a first, upper, cantilever beam (5) and the blower unit (8) of the second unit (30) is held on the carrying frame by a second, lower, cantilever beam (4).

10. Spraying device according to claim 9,
**characterised in that** the second unit (30) is located between the first, upper, cantilever beam (5) and the second, lower, cantilever beam (4).

11. Spraying device according to claim 9 or 10,
**characterised in that** the deflection of the first, upper, cantilever beam (5) is limited by the second, lower, cantilever beam (4).

12. Spraying device according to any of claims 9 to 11,
**characterised in that** the carrying frame (2) with the cantilever beams (4, 5) is made of plastic.

## Revendications

1. Pulvérisateur portable composé d'un cadre porteur (2), d'une unité à soufflante (8) et d'un réservoir (10) pour un produit à appliquer, une première unité (20) avec le réservoir (10) et une seconde unité (30) avec l'unité à soufflante (8) étant fixées au cadre porteur (2), et la première unité (20) et la seconde unité (30) étant disposées avec un écartement (z) dans le sens vertical du cadre porteur (2), l'écartement (z) étant choisi pour qu'un interstice de mouvement (17) soit formé entre la première unité, supérieure (20) et la seconde unité, inférieure, (30), **caractérisé en ce qu'**il est prévu sur une unité (20, 30) un élément de butée amortisseur (40) qui limite l'interstice de mouvement (17) et qui amortit une dérive élastique de la première unité, supérieure (20) par l'application de l'élément de butée (40) contre l'autre unité (30).

2. Pulvérisateur selon la revendication 1,
**caractérisé en ce que** l'élément de butée (40) est disposé sur l'unité supérieure (20).

3. Pulvérisateur selon la revendication 1,
**caractérisé en ce que** l'élément de butée (40) se compose de deux pièces de butée (45, 46) mobiles l'une par rapport à l'autre, et une première pièce de butée (45) est fixée à l'unité supérieure (20), et une seconde pièce de butée (46) à l'unité inférieure (30).

4. Pulvérisateur selon la revendication 1,
**caractérisé en ce que** l'élément de butée (40) est conçu comme un élément d'amortissement en caoutchouc.

5. Pulvérisateur selon la revendication 4,
**caractérisé en ce que** l'élément de butée (40) se compose d'une section d'amortissement élastique (42) et d'une fixation (43), qui sont alignées l'une derrière l'autre.

6. Pulvérisateur selon la revendication 5,
**caractérisé en ce que** la section d'amortissement (42) est en caoutchouc.

7. Pulvérisateur selon la revendication 1,
**caractérisé en ce que** la seconde unité, inférieure (30) est fixée au cadre porteur (2) avec des éléments antivibrations (22, 24).

8. Pulvérisateur selon la revendication 1,
**caractérisé en ce qu'**après l'application de l'élément de butée (40) contre l'unité (30) opposée est formé un autre niveau d'amortissement, dont la courbe caractéristique est définie par les propriétés des éléments antivibrations (22, 24) de la seconde unité, inférieure (30).

9. Pulvérisateur selon la revendication 1,
**caractérisé en ce que** le réservoir (10) de la première unité (20) est fixé au cadre porteur avec un premier support en porte-à-faux, supérieur (5), et l'unité à soufflante (8) de la seconde unité (30) est fixée au cadre porteur avec un second support en porte-à-faux, inférieur (4).

10. Pulvérisateur selon la revendication 9,
**caractérisé en ce que** la seconde unité (30) est disposée entre le premier support en porte-à-faux, supérieur (5), et le second support en porte-à-faux, inférieur (4).

11. Pulvérisateur selon la revendication 9 ou 10,
**caractérisé en ce que** la dérive du premier support en porte-à-faux, supérieur (5) est limitée par le second support en porte-à-faux, inférieur (4).

12. Pulvérisateur selon l'une des revendications 9 à 11,
**caractérisé en ce que** le cadre porteur (2) avec les supports en porte-à-faux (4, 5) est en matière plastique.
